# EUROPÄISCHE PATENTANMELDUNG

(11) **EP 0 647 054 A1**
(43) Veröffentlichungstag der Anmeldung: **05.04.1995**
(21) Anmeldenummer: 94114832.2
(22) Anmeldetag: 20.09.1994
(51) Int. Cl.: H04M 11/06

(54) **Schnittstellenanordnung zwischen einer Fernsprechendeinrichtung und einem Modem**

(30) Priorität: 30.09.1993 DE 4333435
(71) Anmelder: SIEMENS AKTIENGESELLSCHAFT, D-80333 München (DE)
(72) Erfinder: Ahlmer, Hubert, Dipl.-Ing., D-48712 Gescher (DE); Scholz, Roland, Dipl.-Ing., D-45772 Marl (DE)

(57) **Zusammenfassung**

Schnittstellenanordnung SA1 zwischen einer Fernsprechendeinrichtung FE und einem Modem M, mindestens mit löbaren Verbindungen Asl1a, Asl1b, Asl2a, Asl2b zum Übertragen von
- mit einer Vermittlungseinrichtung verbindbaren Teilnehmeranschlußleitungen Asl1,
- vom Modem schaltbaren Anschlußleitungen Asl2,
- einem Bezugspotential Ub des Modems M,
- einem Versorgungspotentialk Us des Modems M und
- einem vom Modem M abgebbaren Signal EHC zum Bewirken eines Teilnehmerschleifenschlusses in der Fernsprechendeinrichtung FE.
Außerdem eine Fernsprechendeinrichtung FE bzw. ein Modem M mit einem Schnittstellenanschluß einer solchen Schnittstellenanordnung SA1.

## Beschreibung

Die Erfindung betrifft eine Schnittstellenanordnung zwischen einer Fernsprechendeinrichtung und einem Modem sowie eine Fernsprechendeinrichtung bzw. ein Modem mit einem Schnittstellenanschluß einer solchen Schnittstellenanordnung.

Solche Schnittstellen bilden üblicherweise lösbare Verbindungen zwischen einem Modem und einer Fernsprechendeinrichtung. Hierzu werden meist genormte Steckverbindungen, wie z.B. sogenannte Western-Steckverbindungen oder TAE6-Steckverbindungen verwendet. Der prinzipielle Aufbau eines Modems sowie unterschiedliche Grundschaltungen, in denen ein Modem mit einer Datenendeinrichtung, einer Fernsprechendeinrichtung und einer Vermittlungseinrichtung verbunden werden kann, sind aus "Datenübertragung" von W. Bacher, D. Grunow und F. Schierenbeck, Siemens Aktiengesellschaft, 1978, insbesondere Kapitel 3.5 und hier auf den Seiten 217 bis 223 bekannt. Wie ein Modem mit einer Fernsprechendeinrichtung und gemeinsam hiermit mit einer Vermittlungseinrichtung verbunden wird, ist u.a. aus dem Artikel "So kommt Ihr Modem ans Netz" von J. Kahlenberg, TELECOM 1/93, Seiten 84 bis 86 zu entnehmen. Dieser Artikel beschreibt, daß beim Anschließen eines Modems und eines Telefones an eine zu einer Vermittlungsanlage führende Teilnehmeranschlußeinheit das Modem unmittelbar mit dieser verbunden wird und die Fernsprechendeinrichtung mit dem Modem verbunden wird. Falls vorhanden, sind hierbei ein Anschluß für die Fernsprecherde und ein Anschluß für eine Zusatzweckeinrichtung unmittelbar durch das Modem durchgeschleift. Die mit der Teilnehmeranschlußeinheit verbundenen Teilnehmeranschlußleitungen des Modems sind über eine im Modem enthaltene Umschalteinrichtung vom Modem oder ggf. vom Telefon gesteuert entweder zu einer Datenendeinrichtung oder zu der angeschlossenen Fernsprechendeinrichtung umschaltbar.

Im Zuge immer kleiner werdender Datenendeinrichtungen, die immer enger in das Arbeitsleben eingebunden werden, ist es mittlerweile üblich, handliche Datenendeinrichtungen sowohl am Arbeitsplatz als auch auf der Reise oder bei Dienstgängen mit sich zu führen und diese bedarfsweise über ein ebenfalls hanliches Modem an eine Telekommunikattionsanlage anzuschließen. Wird hierbei das Modem gemeinsam mit einem Fernsprechendgerät an eine private oder öffentliche Telekommunikationsanlage angeschlossen, so muß diese Fernsprechendeinrichtung von einer Teilnehmeranschlußeinheit getrennt werden, ggf. unter Verwendung eines speziellen Verbindungskabels an das Modem angeschlossen werden und das Modem muß mit der Teilnehmeranschlußeinheit über ein weiteres Kabel verbunden werden. Dieses Vorgehen ist relativ aufwendig. Darüber hinaus sind technisch Ungeübte damit oft überfordert.

Aufgabe der vorliegenden Erfindung ist es, eine Schnittstellenanordnung zwischen einer Fernsprechendeinrichtung und einem Modem bereitzustellen, die ein einfaches An- und Abkoppeln eines in Verbindung mit der Fernsprechendeinrichtung in einem Telekommunikationssystem zu betreibenden Modems ermöglicht. Darüberhinaus soll die Schnittstelle einen komfortablen Verbindungsaufbau von Sprachverbindungen, gesteuert von einer Steuereinheit des Modems bzw. einer daran angeschlossenen Datenendeinrichtung, ermöglichen.

Eine Schnittstellenanordnung mit den Merkmalen des Patentanspruches 1 löst diese Aufgabe. Günstige Ausgestaltungen der Erfindung mit zusätzlichen Merkmalen sind Gegenstand von Unteransprüchen.

Ansprüche 16, 17 und 18 betreffen Fernsprechendgeräte mit Schnittstellenanschlüssen einer entsprechenden Schnittstellenanordnung. Anspruch 19 betrifft ein solches Modem.

Die vorgeschlagene Schnittstellenanordnung enthält neben lösbaren Verbindungen zum Übertragen von an eine Vermittlungseinrichtung anschließbaren Teilnehmeranschlußleitungen und vom Modem schaltbaren Anschlußleitungen zusätzlich lösbare Verbindungen zum Übertragen eines Bezugspotentiales des Modems, zum Übertragen eines Versorgungspotentiales des Modems und zum Übertragen eines vom Modem abgebbaren Signales, das in einer über die Schnittstellenanordnung mit dem Modem verbundenen Fernsprechendeinrichtung einen Teilnehmerschleifenschluß bewirken kann.

Eine solche Schnittstellenanordnung ermöglicht es, daß die Fernsprechendeinrichtung dauerhaft mit einer Teilnehmeranschlußeinheit verbunden werden kann. Ein Umschalter, üblicherweise ein Relais, kann in der Fernsprechendeinrichtung enthalten sein, um die Teilnehmeranschlußleitungen vom Modem gesteuert wahlweise an das Modem oder unmittelbar an die Fernsprechendeinrichtung zu schalten. Das Modem ist hierbei ausgestaltet, um die Teilnehmeranschlußleitungen wahlweise an eine dem Modem nachgeschaltete Datenendeinrichtung oder an Fernsprechendeinrichtung zu schalten. Ein Steuern dieser Umschalteinrichtung durch das Modem wird ermöglicht durch die lösbaren Verbindungen der Schnittstellenanordnung, die ein Bezugspotential und ein Versorgungspotential des Modems zur Fernsprechendeinrichtung übertragen. Wird als Umschalteinrichtung ein Relais verwendet, so kann dieses abhängig vom Vorhandensein des Bezugspotentiales und des Versorgungspotentiales des Modems an den Verbindungen der Schnittstellenanordnung die eine oder andere Schaltstellung einnehmen. In einer einfachen Ausführungsform wird hierbei an den entsprechenden Verbindungsanschlüssen des Modems die zwischen den besagten Potentialen bestehende Spannung immer angelegt, wenn das Modem Betriebsspannung hat. Folglich wird immer dann, wenn ein über die Schnittstellenanordnung mit der Fernsprechendeinrichtung verbundenes Modem angeschlossen ist und aktiviert ist, eine Umschalteinrichtung in der Fernsprechendeinrichtung derart betätigt, daß die von der Teilnehmeranschlußeinheit zur Fernsprechendeinrichtung geführten Teilnehmeranschlußleitungen an die entsprechenden Teilnemeranschlußleitungen der Schnittstellenanordnung und somit zum Modem geschaltet sind.

Über die lösbare Verbindung der Schnittstellenanordnung zum Übertragen eines Signales vom Modem an die Fernsprechendeinrichtung, das einen Teilnehmerschleifenschluß in der Fernsprechendeinrichtung bewirkt, ist ein komfortabler Verbindungsaufbau durch das Modem bzw. durch eine am Modem angeschlossene Datenendeinrichtung unter Verwendung des Modems möglich. Hierzu wird vorzugsweise eine Fernsprechendeinrichtung mit einer Lauthör-Funktion und/oder einer Freisprech-Funktion verwendet. In einer einfachen Ausgestaltungsform einer die erfindungsgemäße Schnittstellenanordnung verwendenden Kombination aus Modem und Fernsprechendeinrichtung wählt das Modem eine Rufnummer, signalisiert bei Wahlende, daß ein Handapparat abgenommen werden muß und bewirkt über die erfindungsgemäße Schnittstellenanordnung einen Teilnehmersachleifenschluß in der Fernsprechendeinrichtung. Bei Verwendung einer Fernsprechendeinrichtung mit Lauthör-Funktion kann das Modem hierbei gleichzeitig den Lautsprecher der Fernsprechendeinrichtung aktivieren. Bei Verwendung eines Telefons mit Freisprech-Funktion kann die Freisprech-Funktion aktiviert werden.

Eine Ausgestaltung einer erfindungsgemäßen Schnittstellenanordnung sieht zusätzlich mehrere lösbare Verbindungen vor, die gemeinsam einen - vorzugsweise seriellen - Datenkanal vom Modem zur Fernsprechendeinrichtung zum übertragen von Wahldaten bilden. In diesem Fall kann über die Schnittstellenanordnung eine Modem-Fernsprechendeinrichtung-Kombination verbunden werden, die folgenden Ablauf zum automatischen Aufbau von Sprachverbindungen ausführt. Das Modem bewirkt über die Schnittstellenanordnung in der Fernsprechendeinrichtung einen Teilnehmerschleifenschluß. Gegebenenfalls nach einer kurzen Verzögerungszeit überträgt das Modem über den zuvor genannten Datenkanal Wahlinformationen, wie z.B. die zu wählende Rufnummer. Die Fernsprechendeinrichtung führt dann selbsttätig eine Wahl mit der übermittelten Rufnummer durch.

Wenn das verwendete Modem hierbei einen Schleifenschlußdetektor enthält, der einen Schleifenschluß in der Fernsprechendeinrichtung signalisiert, so kann zusätzlich vorgesehen sein, daß das Modem nach Aktivieren des Teilnehmerschleifenschlusses in der Fernsprechendeinrichtung erst überwacht, ob ein Schleifenschluß tatsächlich stattgefunden hat und erst daraufhin einen Wahlruf durch die Fernsprechendeinrichtung initiieren.

Eine günstige Ausgestaltungsform einer erfindungsgemäßen Schnittstellenanordnung sieht eine lösbare Verbindung zum Übertragen der Fernsprecherde vor. Dadurch kann die entsprechende Modem-Fernsprechendeinrichtung-Kombination auch in privaten Telekommunikationsanlagen bzw. Fernsprechnebenstellenanlagen verwendet werden, sofern diese mit analogen Teilnehmeranschlußeinheiten ausrüstbar sind.

Innerhalb des Modems ist üblicherweise eine Umschalteinrichtung vorgesehen, die die Teilnehmeranschlußleitungen der Schnittstellenanordnung wahlweise an interne Anschlußleitungen des Modems oder an die vom Modem schaltbaren Anschlußleitungen der Schnittstellenanordnung anschalten kann. Die Verbindungen der Schnittstellenanordnung, die die vom Modem schaltbaren Anschlußleitungen an die Fernsprechendeinrichtung verbinden, sind hierbei üblicherweise mit internen Anschlußleitungen der Fernsprechendeinrichtung zusammengeschaltet.

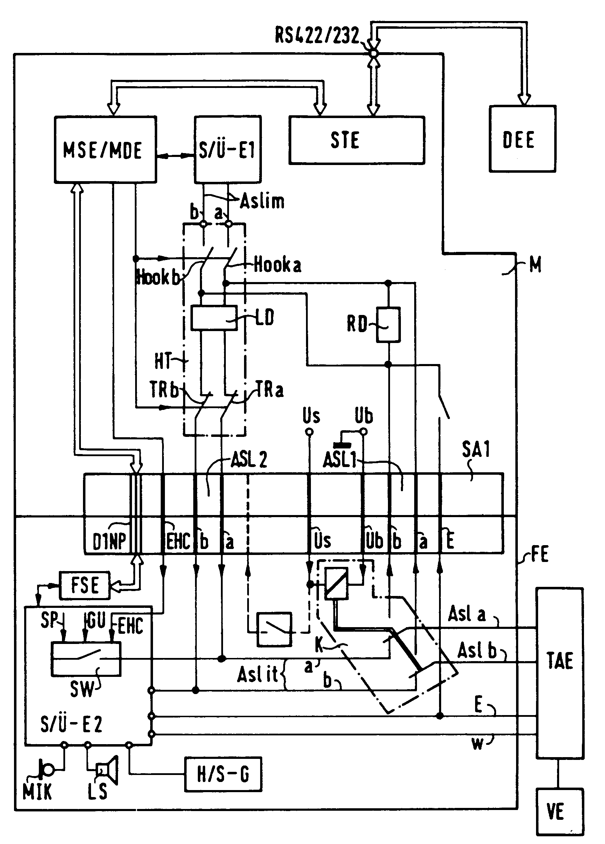

Nachstehend wird die Erfindung unter Bezugnahme auf die Figur näher erläutert.

Die in der Figur verwendeten Bezugszeichen haben hierbei folgende Bedeutung:
- SA1: Schnittstellenanordnung
- FE: Fernsprechendeinrichtung
- M: Modem
- E: Fernsprecherde-Leitung
- VE: Vermittlungseinrichtung
- ASL1a, ASL1b: Teilnehmeranschlußleitungen
- TAE: Teilnehmeranschlußeinheit
- Asla, Aslb: Teilnehmeranschlußleitungen
- Ub: Leitung mit Bezugspotential des Modems
- Us: Leitung mit Versorgungspotential des Modems
- D1NP: Datenkanal
- K: Umschalteinrichtung
- HT: Umschalteinrichtung
- Hooka, Hookb: Schalter der Umschalteinrichtung HT
- TRa, TRb: Schalter der Umschalteinrichtung HT
- Aslita, Aslitb: Teilnehmeranschlußleitungen
- MSE: Modemsteuereinheit
- MDE: Modulator-Demodulator-Einheit
- S/Ü-E1: Signalisierungs-/Übertragungseinheit
- S/Ü-E2: Signalisierungs-/Übertragungseinheit
- EHC: Schnittstellenverbindung für ein Signal von MSE zum Bewirken eines Teilnehmerschleifenschlußes in Fe
- STE: Schnittstellentreibereinheit
- RS 422/232: Schnittstelle
- DEE: Datenendeinrichtung
- FSE: Steuereinheit der Fernsprechendeinrichtung
- w: Rufsignalzusatzleitung
- SW: Schalter für den Teilnehmerschleifenschluß in FE
- SP: Signal zum Bewirken eines Schleifenschlußes
- GU: Signal, Abhängig vom Gabelumschalter
- H/S-G: Hör/Sprechgarnitur
- MIK: Mikrofon
- LS: Lautsprecher
- LD: Schleifenschlußdetektor
- RD: Rufsignaldetektor
Die Figur zeigt eine Schnittstellenanordnung SA1 als Teil einer Fernsprechendeinrichtung FE und eines Modems M. Die Verbindungen der gezeigten Schnittstellenanordnung SA1 sind hierbei in Anlehnung an die verbundenen Leitungen oder an die zu übertragenden Signale benannt. Dargestellt sind Verbindungen E für die Fernsprecherde, ASL1a und ASL1b für die mit einer Vermittlungeinrichtung verbindbaren Teilnehmeranschlußleitungen ASL1, Ub zur Übertragung eines Bezugspotentiales Ub des Modems M, Us zur Übertragung eines Versorgungspotential Us des Modems, ASL2 zum Verbinden von vom Modem geschalteten Anschlußleitungen mit den internen Teilnehmeranschlußleitungen Aslit der Fernsprechendeinrichtung, EHC zur Übertragung eines Signales zur Schleifenschlußsteuerung in der Fernsprechendeinrichtung durch das Modem M und D1NP für einen Datenkanal vom Modem M zur Fernsprechendeinrichtung FE zur Übertragung von Wahldaten.

Darüberhinaus ist eine nicht bezeichnete unterbrochene Verbindungslinie dargestellt, die einerseits erkennen läßt, daß eine entsprechende Schnittstellenanordnung noch mehr Verbindungen haben kann und die darüberhinaus in Verbindung mit dem ebenfalls nicht bezeichneten Schalter, der über unterbrochene Linien zu dem Versorgungspotential Us des Modems geführt ist erkennen läßt, daß von der Fernsprechendeinrichtung FE ggf. Signale zum Modem übertragen werden können, deren Pegel ggf. von einem Potentialpegel im Modem abgeleitet ist, wobei die erforderliche Energie vom Modem bereitgestellt wird. Die Verbindungen der Anschlußleitungen Asl1a und Asl2b sind in der Fernsprechendeinrichtung FE mit in der Grundstellung unbeschalteten Anschlüssen einer Umschaltvorrichtung K verbunden. Die in der Fernsprechendeinrichtung FE enthaltene Umschaltvorrichtung K dient dazu, über eine Teilnehmeranschlußeinheit TAE mit einer Vermittlungseinrichtung VE verbindbare Teilnehmeranschlußleitungen Asl a und b in Abhängigkeit von einer durch das Modem an die beiden Schnittstellenverbindungen Ub und Us angelegten Spannung bzw. einem entsprechenden Signal wahlweise an interne Anschlußleitungen Aslita und Aslitb der Fernsprechendeinrichtung FE zu schalten oder an die Schnittstellenverbindungen ASL1a und ASL1b der Schnittstellenanordnung SA1. Die Schnittstellenverbindungen ASL1a und ASL1b der Schnittstellenanordnung SA1 sind im Modem M zu einer Umschalteinrichtung HT geleitet. Die Umschalteinrichtung HT verbindet in einer Grundstellung die Schnittstellenverbindungen ASL1a und ASL1b der Teilnehmeranschlußleitungen mit den Schnittstellenverbindungen Asl2a bzw. Asl2b. Die Umschalteinrichtung HT ist von einer Modemsteuereinheit MSE gesteuert umschaltbar, so das die Teilnehmeranschlußleitungen Asl1a und Asl1b wahlweise über die Schalter Hooka und Hookb an eine Signalisierungs-/Übertragungseinheit S/Ü-E1 des Modems geschaltet werden oder über die Schalter TRb und TRa an eine Signalisierungs-/Übertragungseinheit S/Ü-E2 des Fernsprechendgeräts FE. Die Signalisierungs-/Übertragungseinheit S/Ü-E1 kommuniziert mit einer Modulator-Demodulatoreinheit und mit der Modemsteuereinheit, die in der Figur als einzelner Block MSE/MDE dargestellt sind. Die Modemsteuereinheit MSE liefert an die Schnittstellenverbindung EHC der Schnittstellenanordnung SA1 ein Schleifenschlußsteuersignal EHC. Die Modulator-Demodulatoreinheit und die Modemsteuereinheit MSE/MDE kommunizieren mit einer an das Modem ggf. über eine Schnittstellentreibereinheit STE und eine Schnittstelle RS422/232 anschließbare Datenendeinrichtung DEE. In dem in der Figur gezeigten Ausführungsbeispiel ist außerdem ein Datenkanal zwischen der Modemsteuereinheit MSE und einer Steuereinheit FSE des Fernsprechendgerätes FE über Schnittstellenverbindungen D1NP der Schnittstellenanordnung SA1 vorgesehen. Dieser Datenkanal ist vornehmlich zur Übertragung von Wahlinformationen von der Modemsteuereinheit MSE/MDE zur Steuereinheit FSE der Fernsprechendeinrichtung vorgesehen. Er kann ggf. im Simplexbetrieb arbeiten, kann jedoch auch als bidirektionaler Datenkanal ausgeführt sein. Eine die Fernsprecherde führende Schnittstellenverbindung E kann in Fernmeldenebenstellenanlagen erforderlich sein. Ist eine Schnittstellenverbindung E vorgesehen, die über die Fernsprechendeinrichtung FE mit dem entsprechendem Anschluß einer Teilnehmeranschlußeinheit TAE verbunden ist, wird ggf. innerhalb des Modems M bedarfsweise diese die Fernsprecherde führende Schnittstellenverbindung E über eine nicht näher bezeichnete Schaltverbindung an eine Anschlußleitung Asl1b geschaltet.

Die Steuereinheit FSE der Fernsprechendeinrichtung FE steuert eine Signalisierungs-/Übertragungseinheit S/Ü-E2 der Fernsprechendeinrichtung FE. Die Signalisierungs-/Übertragungseinheit S/Ü-E2 enthält u.a. einen Schalter SW, um den Teilnehmerschleifenschluß in der Fernsprechendeinrichtung FE zu bewirken. In dem Ausführungsbeispiel der Figur ist dieser Schalter SW durch die Steuereinrichtung FSE in Abhängigkeit vom Zustand eines Gebelschalters über ein Signal GU und bei Aktivierung einer Freisprechfunktion über ein Siganl SP zum Bewirken eines Schleifenschlusses steuerbar. Zusätzlich ist der Schalter SW von der Modemsteuereinheit MSE über die Schnittstellenverbindung EHS steuerbar. Der Zustand des Schalters SW kann hierbei unmittelbar ggf. über eine nicht dargestellte Treiberschaltung von der Modemsteuereinheit MSE beeinflußt werden. Insbesondere bei einer Fernsprechendeinrichtung mit Freisprechfunktion kann jedoch die Modemsteuereinheit MSE auch über die Schnittstellenverbindung EHC die Steuereinheit FSE veranlassen, die Freisprechfunktion zu aktivieren, so daß ein unmittelbares Einwirken der Modemsteuereinheit MSE auf die Signalisierungs-/Übertragungseinheit S/Ü-E2 nicht erforderlich ist. Bei aktivierter Freisprechfunktion wird unabhängig von einem durch die Hörsprechgarnitur H/S-G bedingten Schaltzustand des Fernsprechendgerätes über ein Mikrofon MIK und einen Lautsprecher LS ein Fernsprechvorgang bewirkt.

## Patentansprüche

1. Schnittstellenanordnung (SA1) zwischen einer Fernsprechendeinrichtung (FE) und einem Modem (M), mindestens mit löbaren Verbindungen (Asl1a, Asl1b, Asl2a, Asl2a) zum Übertragen von
- mit einer Vermittlungseinrichtung verbindbaren Teilnehmeranschlußleitungen (Asl1) und
- vom Modem schaltbaren Anschlußleitungen (Asl2), **gekennzeichnet** durch lösbare Verbindungen (Ub, Us, EHS) zum Übertragen von
- einem Bezugspotential (Ub) des Modems (M),
- einem Versorgungspotentialk (Us) des Modems und
- einem vom Modem (M) abgebbaren Signal (EHC) zum Bewirken eines Teilnehmerschleifenschlusses in der Fernsprechendeinrichtung (FE).

2. Schnittstellenanordnung (SA1) nach Anspruch 1, **gekennzeichnet** durch eine lösbare Verbindung (E) zum Übertragen der Fernsprecherde (E).

3. Schnittstellenanordnung (SA1) nach einem der vorhergehenden Ansprüche, dadurch **gekennzeichnet,** daß die Teilnehmeranschlußleitungen (Asl1) über einen der Fernsprechendeinrichtung (FE) angehörigen Teil einer Teilnehmeranschlußeinheit (TAE; Asl) an eine Vermittlungseinrichtung anschließbar sind.

4. Schnittstellenanordnung (SA1) nach Anspruch 3, dadurch **gekennzeichnet,** daß die Teilnehmeranschlußleitungen (Asl1) der Schnittstellenanordnung (SA1) mit Hilfe einer vom Modem (M) steuerbaren ersten Umschalteinrichtung (K) an die Telekommunikationsanschlußeinheit (TAE,Asl) schaltbar sind.

5. Schnittstellenanordnung (SA1) nach Anspruch 4, dadurch **gekennzeichnet,** daß die erste Umschalteinrichtung (K) die Teilnehmeranschlußleitungen (Asl) der Telekommunikationsanschlußeinheit (TAE) in einer Grundstellung unmittelbar an interne Anschlußleitungen (Aslit) der Fernsprechendeinrichtung (FE) schaltet und in einer Umschaltstellung an die Verbindungen (Asl1a, Asl1b) für die Teilnehmeranschlußleitungen der Schnittstellenanordnung (SA1) schaltet.

6. Schnittstellenanordnung (SA1) nach einem der vorhergehenden Ansprüche, dadurch **gekennzeichnet,** daß die Teilnehmeranschlußleitungen (Asl1) im Modem (M) mit Hilfe einer vom Modem (M) steuerbaren zweiten Umschalteinrichtung (HT) wahlweise an interne Anschlußleitungen (Aslim) des Modems (M) oder an die vom Modem (M) schaltbaren Anschlußleitungen (Asl2) der Schnittstellenanordnung (SA1) schlatbar sind.

7. Schnittstellenanordnung (SA1) nach einem der vorhergehenden Ansprüche, dadurch **gekennzeichnet,** daß die vom Modem (M) schaltbaren Anschlußleitungen (Asl2) der Schnittstellenanordnung (SA1) mit internen Anschlußleitungen (Aslit) der Fernsprechendeinrichtung verbunden sind.

8. Schnittstellenanordnung (SA1) nach einem der vorhergehenden Ansprüche, **gekennzeichnet** durch einen Weckrufdetektor (RD) innerhalb des Modems (M) zum Erfassen eines auf den Teilnehmeranschlußleitungen (Asl1) der Schnittstellenanordnung (SA1) ankommenden Weckrufes.

9. Schnittstellenanordnung (SA1) nach einem der vorhergehenden Ansprüche, **gekennzeichnet** durch einen Schleifenschlußdetektor (LD) im Modem (M) zum Erfassen eines in der Fernsprechendeinrichtung (FE) vorliegenden Teilnehmerschleifenschlusses.

10. Schnittstellenanordnung (SA1) nach einem der Ansprüche 4 bis 9, dadurch **gekennzeichnet,** daß die erste Umschalteinrichtung (K) vom Modem (M) über die zum Übertragen eines Bezugspotentials (Ub) des Modems (M) vorgesehene Schnittstellenverbindung (Ub) und über die zum Übertragen eines Versorgungspotentiales (Us) des Modems (M) vorgesehene Schnittstellenverbindung (Us) ansteuerbar ist.

11. Schnittstellenanordnung (SA1) nach einem der vorhergehenden Ansprüche, dadurch **gekennzeichnet,** daß das über die Schnittstellenverbindungen übertragene, vom Modem (M) abgebbare Signal (EHC) zum Bewirken eines Teilnehmerschleifenschlusses in der Fernsprechendeinrichtung (FE) auf den Schaltzustand eines den Schleifenschluß bewirkenden Schalters (SW) in der Fernsprechendeinrichtung (FE) einwirkt.

12. Schnittstellenanordnung (SA1) nach Anspruch 11, dadurch **gekennzeichnet,** daß die Fernsprechendeinrichtung (FE) einen von der Hör/Sprechgarnitur (H/S-G) unabhängigen Lautsprecher (LS) zum Lauthören von Telefongesprächen hat und daß das vom Modem (M) abgebbare Signal (EHC) zum Bewirken eines Teilnehmerschleifenschlusses auch diesen Lautsprecher (LS) aktiviert.

13. Schnittstellenanordnung (SA1) nach Anspruch 11 oder 12, dadurch **gekennzeichnet,** daß die Fernsprechendeinrichtung (FE) eine Freisprechfunktion hat und daß das Modem (M) beim Bewirken eines Teilnehmerschleifenschlusses in der Fernsprechendeinrichtung (FE) diese Freisprechfunktion aktiviert.

14. Schnittstellenanordnung (SA1) nach einem der Ansprüche 9 bis 13, dadurch **gekennzeichnet,** daß das Modem (M) in der Fernsprechendeinrichtung (FE) abhängig von einem von dem Schleifenschlußdetektor (LD) erhaltenen Signal nur dann ein Signal (EHC) zum Bewirken eines Teilnehmerschleifenschlusses in der Fernsprechendeinrichtung (FE) abgibt, wenn die Teilnehmerschleife noch nicht geschlossen ist.

15. Schnittstellenanordnung (SA1) nach einem der vorhergehenden Ansprüche, **gekennzeichnet** durch mehrere lösbare Verbindungen (D1NP), die gemeinsam einen Datenkanal zwischen Modem (M) und Fernsprechendeinrichtung (FE) zur Übertragung von Wahldaten bilden.

16. Fernsprechendeinrichtung mit einem Schnittstellenanschluß einer Schnittstellenanordnung (SA1) nach einem der vorhergehenden Ansprüche.

17. Fernsprechendeinrichtung nach Anspruch 15 mit einem Teil einer Teilnehmeranschlußeinheit (TAE), **gekennzeichnet** durch ein Relais als erste Umschalteinrichtung (K), zum wahlweisen Anschalten der Anschlußleitungen (Asl) der Teilnehmeranschlußeinheit (TAE) an interne Anschlußleitungen (Aslit) der Fernsprechendeinrichtung (FE) oder an die Teilnehmeranschlußleitungen (Asl1) des Schnittstellenanschlusses, wobei der Schaltzustand des Relais (K) über die ein vom Modem (M) abgebbares Versorgungspotential (Us) übertragende Schnittstellenverbindung (Us) und die ein Bezugspotential (Ub) des Modems übertragende Verbindung der Schnittstellenverbindung (FE) steuerbar ist.

18. Fernsprechendeinrichtung nach Anspruch 15 oder 16, **gekennzeichnet** durch eine Vorrichtung zum Bewirken eines Teilnehmerschleifenschlusses in Abhängigkeit von einem an der entsprechenden Schnittstellenverbindung (EHC) anliegenden Signal.

19. Modern mit einem Schnittstellenanschluß einer Schnittstellenanordnung (SA1) nach einem der Ansprüche 1 bis 14.
